# EUROPEAN PATENT APPLICATION

(11) **EP 4 439 400 A1**
(43) Date of publication of application: **02.10.2024**
(21) Application number: 21843573.3
(22) Date of filing: 25.11.2021
(51) Int. Cl.: G06N 5/02, G06N 3/08

(54) **APPARATUS AND METHOD FOR GENERATING SYNTHETIC DATA FOR MODEL TRAINING**

(71) Applicant: TESTWORKS INC., Seoul 05623 (KR)
(72) Inventor: PARK, Ye-Seong, Hwaseong-si, Gyeonggi-do 18504 (KR); KIM, Hyeong-Bok, Suwon-si, Gyeonggi-do 16679 (KR); LEE, Jin-Suk, Seoul 05503 (KR); YOON, Suk-Won, Seoul 05611 (KR)
(74) Representative: Thun, Clemens
(86) International application number: PCT/KR2021/017460
(87) International publication number: WO 2023/095945

(57) **Abstract**

Disclosed is a synthetic data generation apparatus and method for model learning. Synthetic data is generated using domain adaptation, and a data set processing time is reduced based thereon, and thus, the performance of an artificial intelligence model is improved.

## Description

### Technical Field

The present invention relates to a synthetic data generation method and apparatus for model learning, and more particularly, to a synthetic data generation method and apparatus for model learning that generates synthetic data using domain adaptation, reduces a data set processing time based thereon, and improves the performance of an artificial intelligence model.

### Background Art

Generally, deep learning model-based map learning operates well when learning is performed using a massive amount of data secured from various sources. However, this requires an annotation task that designates a label to every piece of learning data.

In this instance, it is difficult to obtain labeled data in some domains, and thus, in many cases, the amount of data may be insufficient.

If learning is performed using a small and medium amount of data, data may have a domain bias.

That is, in the case of data of a domain that learning data mainly belongs to, a deep learning model performs a task well. However, in the case of data in a domain having a different feature, a domain shift problem may occur in which the performance of the deep learning model may deteriorate.

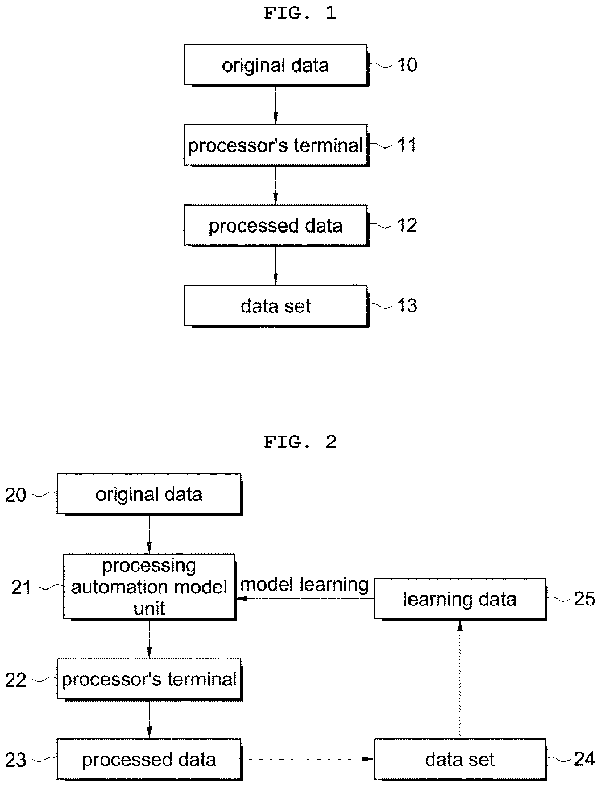

FIG. 1 is a diagram illustrating a normal process of processing a data set. Referring to FIG. 1, if an original image 10 is provided to a processor's terminal 11, a processor may directly designate a main area in the original image 10 using the processor's terminal 11, may generate the processed data 12, and may establish a data set 13 of the generated processed data 12.

FIG. 2 is a diagram illustrating a process of processing a data set using a normal automation artificial intelligence (AI) model. Referring to FIG. 2, at the initial stage of processing a data set, an original image 20 is provided to a processor's terminal 22 without using an AI-based processing automation model unit 21, and a processor may directly designate a main area in the original image 20 using the processor's terminal 22, may generate processed data 23, and may establish a data set 24 of the generated processed data 23.

If the initial data set 24 is established, the processing automation model unit 21 performs learning an AI-based processing automation model using learning data 25 that is based on the initial data set 24. Processing automation is performed on original data additionally collected using the processing automation model that is completely learned. In this instance, the processor may additionally process, via the processor's terminal 22, some objects that are not processed in the original data, and may repeat the corresponding process so as to increase the efficiency of operation by the processor.

However, if the performance of the processing automation model unit fails to satisfy a predetermined requirement, an inspector that inspects processed data may not receive help from the processing automation model and thus, a good quality of processed data and a data set based thereon may be needed to satisfy the required performance of processing automation.

In addition, to learn the processing automation model, a sufficient amount of data set may be needed. However, a large amount of time is needed to secure a sufficient amount of data set, which is drawback.

In addition, in many cases, a data set established at the initial stage may be generally concentrated on a predetermined domain, for example, a domain with an image related to a clear day, and thus, if a processing automation model is learned, an overfitting phenomenon that overfits a predetermined domain may occur, which is a drawback.

In addition, with respect to a domain from which processed data, such as the image (or data) of a predetermined domain, for example, a night image, a rainy day image, a snowy day image, or the like, is difficult or impossible to be collected, learning of a processing automation model may be difficult, which is a drawback.

### Disclosure of Invention

### Technical Problem

To overcome the above-described problems, the present invention provides a synthetic data generation method and apparatus for model learning that generates synthetic data using domain adaptation, reduces a data set processing time based thereon, and improves the performance of an artificial intelligence model.

### Solution to Problem

To overcome the above-described problem, an embodiment of the present invention provides a synthetic data generation apparatus for model learning which generates synthetic data for learning an artificial intelligence (AI)-based processing automation model, and includes a domain generator equipped with a synthetic data generation network that generates synthetic data by performing domain adaptation of arbitrary domain A data via a generative adversarial network (GAN) when generating the synthetic data, and determines whether the synthetic data has a difference from actual domain B data, and the domain generator is configured to generate a synthetic data set based on the generated synthetic data.

In addition, the domain generator according to the embodiment is configured to additionally construct an augmented data set using the generated synthetic data set and one or more data sets including arbitrary domain data.

In addition, the domain generator according to the embodiment configures an integrated data set using the generated synthetic data set and a data set including simulation synthetic data that is generated by a simulation domain generator by performing domain adaptation of simulation processed data provided from a simulator via a generative adversarial network and by determining whether a difference from actual domain data is present.

In addition, the domain A data according to the embodiment includes a label via segmentation.

In addition, the domain generator according to the embodiment includes a domain adaptation unit configured to generate the synthetic data via domain adaptation of the domain A data, and to configure a synthetic data generation network, and a discriminator configured to determine whether the synthetic data generated via the domain adaptation has a difference from the actual domain B data, and to configure a synthetic data generation network.

In addition, the domain generator according to the embodiment includes a domain adaptation unit configured to generate synthetic data via domain adaptation of the domain A data, and to configure a synthetic data generation network, and one or more first domain adaptation units installed to be parallel with the domain adaptation unit, and configured to generate synthetic data via domain adaptation of the domain A data, and to configure a synthetic data generation network.

In addition, an embodiment of the present invention provides a synthetic data generation method for model learning, and the method includes a) a domain adaptation data generation operation in which a domain generator performs domain adaptation of domain A data 300 via a generative adversarial network (GAN)-based synthetic data generation network, so as to generate synthetic data, determines whether the synthetic data has a difference from actual domain B data, and generates a synthetic data set based on the synthetic data.

In addition, the embodiment further includes b) a domain adaptation model application operation in which the domain generator performs learning an artificial intelligence (AI)-based processing automation model based on the generated synthetic data set.

In addition, operation a) according to the embodiment includes a-1) an operation in which the domain generator generates domain A synthetic data that is the same as domain A data 300 without performing domain adaptation, and performs learning that determines whether the generated domain A synthetic data has a difference from actual domain A data; and a-2) an operation in which the domain generator generates the synthetic data by performing domain adaptation of one of the domain A data or the domain A synthetic data generated via learning in operation a-1), and performs learning that determines whether the synthetic data generated via the domain adaptation has a difference from actual domain B data.

In addition, operation b) according to the embodiment includes b-1) an operation in which the domain generator selects an arbitrary domain conversion data set for learning a processing automation model, b-2) an operation in which the domain generator sets a resolution of input data to be input to the processing automation model and a resolution of a latent space, b-3) an operation in which the domain generator performs learning of the processing automation model, and b-4) an operation in which the domain generator evaluates the processing automation model that is completely learned and determines one of passing or relearning, and performs one of setting of a domain conversion model or relearning based on a result.

### Advantageous Effects of Invention

According to the present invention, synthetic data is generated using domain adaptation, and a data set processing time may be reduced based thereon, and thus, the performance of an artificial intelligence model may be promptly improved, which is an advantage.

### Brief Description of Drawings

FIG. 1 is a diagram illustrating a normal process of processing a data set;
FIG. 2 is a diagram illustrating a process of processing a data set using a normal automation artificial intelligence model;
FIG. 3 is a block diagram illustrating a synthetic data generation apparatus for model learning according to an embodiment of the present invention;
FIG. 4 is a diagram illustrating a process of generating synthetic data by the synthetic data generation apparatus for model learning according to the embodiment of FIG. 3;
FIG. 5 is a diagram illustrating an example of the process of generating synthetic data of FIG. 4;
FIG. 6 is a diagram illustrating another example of the process of generating synthetic data of FIG. 4;
FIG. 7 is a diagram illustrating an example of a process of equalizing a data set domain by the synthetic data generation apparatus for model learning according to the embodiment of FIG. 3;FIG. 8 is a diagram illustrating an example of processing a data set using simulation and a synthetic data generation apparatus for model learning according to an embodiment of the present invention;
FIG. 9 is a diagram illustrating an example of a process of generating data using a segmentation label by a synthetic data generation apparatus for model learning according to an embodiment of the present invention;
FIG. 10 is a flowchart illustrating a synthetic data generation method for model learning according to an embodiment of the present invention;
FIG. 11 is a flowchart illustrating an example of a process of generating a domain conversion model in the synthetic data generation method for model learning according to the embodiment of FIG. 10; and
FIG. 12 is a flowchart illustrating an example of a process of applying a domain conversion model in the synthetic data generation method for model learning according to the embodiment of FIG. 10.

### Best Mode for Carrying out the Invention

Hereinafter, the present invention will be described in detail with reference to the embodiments of the present invention and the accompanying drawings, wherein like reference numerals in the drawing may refer to like elements.

Before describing the detailed content for implementation of the present invention, it should be noted that the configuration that is not directly related to the subject matter of the present invention is omitted as far as the subject matter of the present invention is not disturbed.

In addition, the terms or words used in the present specification and claims should be interpreted as the meaning and concept that comply with the technical idea of the invention based on the principal in that an inventor is capable of defining an appropriate term and concept for describing the invention in the best way.

The expression read as a part "comprises" an element in this specification may imply further including another element, instead of excluding another element.

In addition, the ending "unit", "er", and "module" used herein may refer to a unit for processing at least one function or operation, and may be implemented as hardware, software, or a combination of hardware and software.

In addition, 'learn' or 'learning' used in the detailed descriptions and claims of the present invention is a term to describe that a computer system performs machine learning via computing according to a procedure, which is not intended to refer to a mental operation such as human's educational activity. Training is used as a general meaning associated with machine learning.

In addition, a computing device may include a communication device and a processor, and may directly/indirectly communicate with an external computing device via the communication device.

In addition, the term "at least one" is defined as a term including the meaning of a singular number and a plural number, and although the term "at least one" is not present, it is apparent that each element may be provided in the form of a single element or a plurality of elements, and may refer to a single element or a plurality of elements.

In addition, whether each element is prepared in the form of a single element or a plurality of elements may differ depending on an embodiment.

Hereinafter, embodiments of a synthetic data generation apparatus and method for model learning according to an embodiment of the present invention will be described in detail with reference to attached drawings.

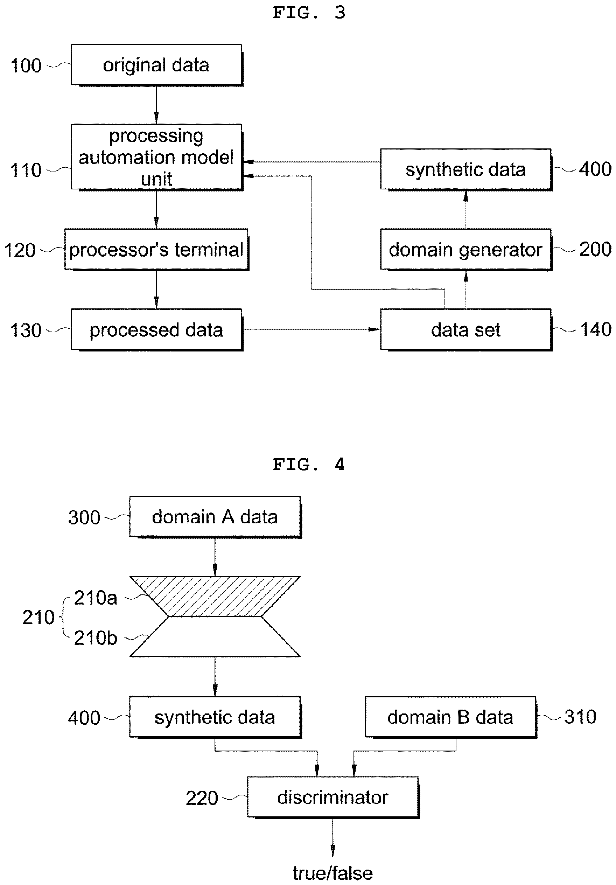

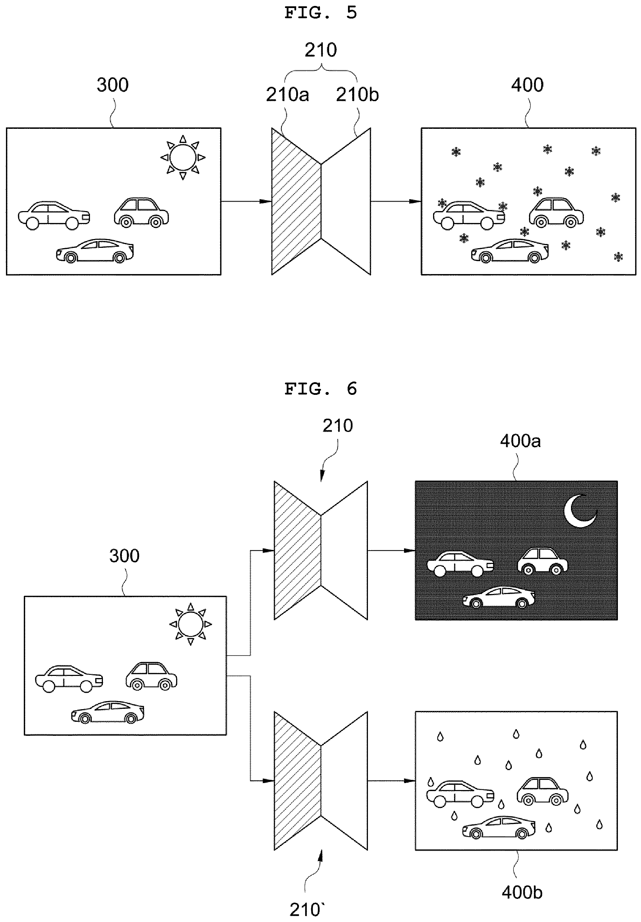

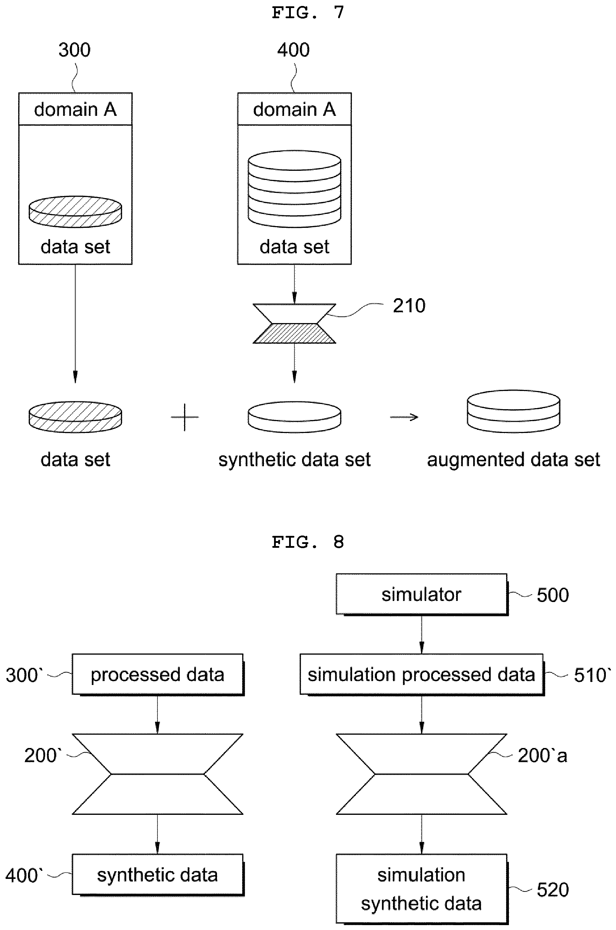

FIG. 3 is a block diagram illustrating a synthetic data generation apparatus for model learning according to an embodiment of the present invention, FIG. 4 is a diagram illustrating an example of a process of generating synthetic data by the synthetic data generation apparatus for model learning according to the embodiment of FIG. 3, FIG. 5 is a diagram illustrating an example of the process of generating synthetic data of FIG. 4, FIG. 6 is a diagram illustrating another example of the process of generating synthetic data of FIG. 4, and FIG. 7 is a diagram illustrating an example of a process of equalizing a data set domain by the synthetic data generation apparatus for model learning according to the embodiment of FIG. 3.

Referring to FIGS. 3 to 7, a synthetic data generation apparatus for model learning according to an embodiment of the present invention may be configured to include a domain generator 200 that generates synthetic data for learning an artificial intelligence (AI)-based processing automation model.

In the case of a data set 140 provided to the domain generator 200, similar to the conventional art, a processor directly designates a main area in an original image 100 via the processor's terminal 120 without using a processing automation model so as to generate processed data 130, and may establish the data set 140 using the generated processed data 130.

Subsequently, the domain generator 200 may generate synthetic data 400 by performing domain adaptation of the domain A data 300 via a generative adversarial network (GAN) which is a synthetic data generation network when generating synthetic data.

Here, the domain adaptation is an unsupervised learning method that learns a deep learning model using source domain data that is relatively easy to obtain, and transfers the knowledge learned from the source domain to a target domain that is hard to obtain.

That is, when a domain is changed, the domain adaptation is to adapt information of an existing domain to a new domain which is different but is related thereto.

In addition, the domain generator 200 performs learning that determines whether the generated synthetic data 400 has a difference from actual domain B data 310, and discriminates true/false so that the synthetic data 400 is generated to be close to the actual domain B data 310.

In addition, based on the synthetic data 400 generated to be close to the actual domain B data 310, the domain generator 200 may establish a synthetic data set for learning AI-based processing automation model. To this end, the domain generator 200 may be configured to include a domain adaptation unit 210 and a discriminator 220.

In addition, the synthetic data 400 generated by the domain generator 200 and the processed data 130 of the data set 140 may be provided to learning of the AI-based processing automation model operated in a processing automation model unit 110.

The domain adaptation unit 210 is a synthetic data generation network that performs domain adaptation of the domain A data 300 which is a source domain and generates the synthetic data 400 which is a target domain. The domain adaptation unit 210 may act as the generator of a generative adversarial network, and may be configured to include a first domain unit 210a that extracts the feature of the domain A data 300 and a second domain unit 210b that extracts the feature of a target domain.

That is, based on the feature or pattern of the domain A data 300 extracted by the first domain unit 210a and the feature or pattern of the target domain extracted by the second domain unit 210b, the domain adaptation unit 210 may adapt the feature or pattern of the domain A data to the target domain so as to generate the new synthetic data 400.

The discriminator 220 is a synthetic data generation network that determines whether a difference is present between the synthetic data 400 that is generated by the domain adaptation unit 210 via domain adaptation and the actual domain B data 310 that is a target domain. The discriminator 220 may be the discriminator of a generative adversarial network, and may compare the synthetic data 400 generated by the domain adaptation unit 210 that is fake data and the domain B data 310 obtained from an actual data set, may discriminate true or false, and may return a probability value in the range between '0' and '1', wherein '1' indicates actual data and '0' indicates fake data.

In addition, the domain adaptation unit 210 and a first domain adaptation unit 210' that perform different domain adaptations are installed in parallel with each other in the domain generator 200.

That is, the domain generator 200 may be configured with the domain adaptation unit 210, which is a synthetic data generation network that generates synthetic data 400a via domain adaptation of the domain A data 300, and the first domain adaptation unit 210', which is a synthetic data generation network that generate synthetic data 400b of a domain different from the synthetic data 400a generated by the domain adaptation unit 210 via domain adaptation, via domain adaptation of the domain A data 300, wherein one or more first domain adaptation units 210' are installed in parallel with the domain adaptation unit 210.

In this instance, the discriminator may be configured for each of the domain adaptation unit 210 and the first domain adaptation unit 210'.

Via the configuration of one or more first domain adaptation units 210' disposed in parallel with the domain adaptation unit 210, a large number of data sets for learning a processing automation model are capable of being established, and a high-performance processing automation model may be promptly secured by using the same for learning the processing automation model.

In addition, via the configuration of one or more first domain adaptation units 210' disposed in parallel with the domain adaptation unit 210, scarce domain data is capable of being secured, and domain bias of data in association with a predetermined domain may be prevented. Through the above, an overfitting phenomenon of the processing automation model may be prevented and thus, a normal processing automation model may be obtained.

To perform sufficient learning for domain adaptation, the domain generator 200 may generate domain A synthetic data that is the same as the domain A data 300 without performing domain adaptation, and may perform learning that determines whether the generated domain A synthetic data has a difference from the actual domain A data 300.

In addition, the domain generator 200 may be configured to sufficiently perform a learning process for generating domain A synthetic data, to perform domain adaptation of one of the domain A data 300 or domain A synthetic data generated via learning so as to generate the synthetic data 400, and to perform learning that determines whether the synthetic data 400 generated via the domain adaptation has a difference from the actual domain B data 310.

In addition, the domain generator 200 may generate the synthetic data 400 according to domain adaptation via the domain adaptation unit 210, and if a data set is established using the same, the domain generator 200 may configure an augmented data set using the established data set of the synthetic data and a data set established based on, for example, the domain A data 300.

Through the above, learning a processing automation model in a scarce predetermined domain may be allowed and a domain data set for learning of the processing automation model may be equalized.

In addition, as illustrated in FIG. 8, For arbitrary processed data 300', the domain generator 200' generates synthetic data 400' through a generative adversarial neural network. The simulation domain generator 200'a performs domain adaptation through a generative adversarial neural network with respect to the simulation processing data 510' provided through the simulator 500. Thereafter, the synthetic data set may be configured using the simulation synthesized data 520 generated by determining whether there is a difference from the real domain data and the data set including the simulation synthesized data 520.

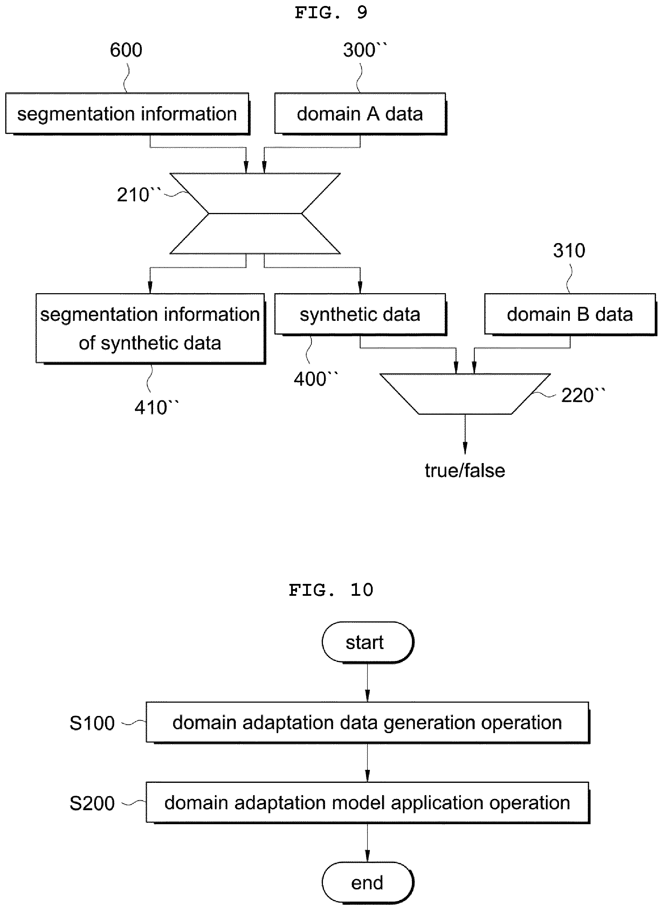

In addition, as described in FIG. 9, in the case in which a label is processed based on segmentation information 600 associated with domain A data 300", a data set including a large amount of information may be established by determining whether synthetic data 400" to which domain adaptation is performed by the domain generator 200" and segmentation information 410" of the synthetic data have a difference from the domain B data 310 which is actual data.

Hereinafter, a synthetic data generation method for model learning according to an embodiment of the present invention will be described.

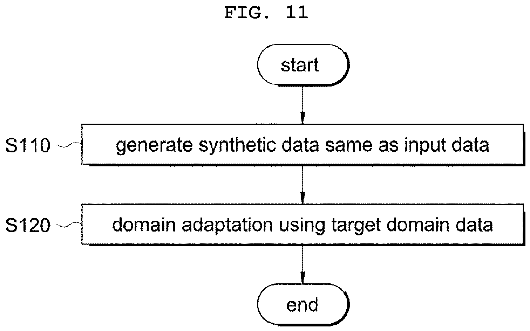

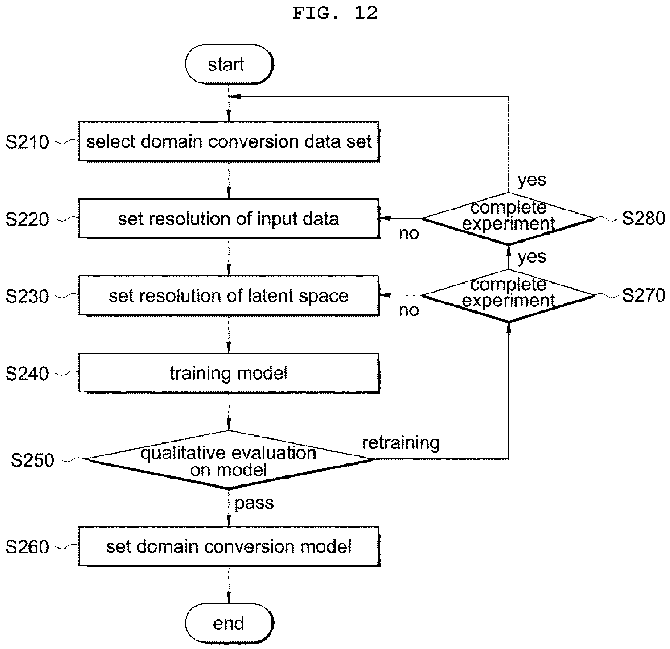

FIG. 10 is a flowchart illustrating a synthetic data generation method for model learning according to an embodiment of the present invention, FIG. 11 is a flowchart illustrating a process of generating a domain conversion model in the synthetic data generation method for model learning according to the embodiment of FIG. 10, and FIG. 12 is a flowchart illustrating a process of applying a domain conversion model in the synthetic data generation method for model learning according to the embodiment of FIG. 10.

Referring to FIGS. 3, 4, and 10 to 12, the synthetic data generation method for model learning according to an embodiment of the present invention may include domain adaptation data generation operation S100 in which the domain generator 200 generates the synthetic data 400 by performing domain adaptation on domain A data 300 via a generative adversarial network (GAN)-based synthetic data generation network, determines whether the synthetic data 400 has a difference from the actual domain B data 310, and generates a synthetic data set based on the synthetic data 400.

In addition, the method may include a domain adaptation model application operation S200 in which the domain generator 200 performs, based on the generated synthetic data set, learning of an artificial intelligence (AI)-based processing automation model.

As a pre-processing process performed before operation S100, a processor directly designates a main area in the original image 100 via the processor's terminal 120 without using a processing automation model, generates the processed data 130, and establishes the data set 140 using the generated processed data 130.

Subsequently, in operation S100, the domain generator 200 generates domain A synthetic data that is the same as the domain A data 300 without performing domain adaptation, and performs learning that determines whether the generated domain A synthetic data has a difference from the actual domain A data 300 in operation S110.

After performing learning for generating domain A synthetic data without domain adaptation via operation S110, the domain generator 200 generates the synthetic data 400 by performing domain adaptation of any one of the domain A data300 or the domain A synthetic data generated via learning in operation S110 with respect to target domain data, for example, domain B data, and perform learning that determines whether the synthetic data 400 generated via the domain adaptation has a difference from the actual domain B data 310 in operation S120.

Via operation S120, scarce domain data may be secured, and thus the domain bias of data in association with a predetermined domain may be prevented and the overfitting phenomenon of the processing automation model may be avoided.

Subsequently, in operation S200, the domain generator 200 selects a domain conversion data set including synthetic data established via operation S100 for learning the processing automation model in operation S210.

In addition, the domain generator 200 sets the resolution of input data to be input to the processing automation model in operation S220, and sets the resolution of a latent space in operation S230.

The setting of resolution in operation S220 is performed by taking progressive growing so as to gradually increase the resolution of input data for learning from, for example, a resolution that generates a 4 x 4 low-resolution image to a resolution that generates a 1024 x 1024 high-resolution image, and thus, a generator that generates a low-resolution image even though a network that increases a resolution is added, and a discriminator that performs determination are not fixed, and learning is continuously performed.

In addition, the setting of the resolution in operation S230 is performed in a manner that increases a resolution high enough to contain information associated with an object to be represented, for example, high enough to secure a sufficient number of parameters for a producer, wherein the magnitude of a latent space is not limited.

Subsequently, the domain generator 200 may perform learning of the processing automation model using information configured in operations S210 to 230, in operation S240, and performs qualitative evaluation based on a processing time, accuracy, or the like using a test data set configured in advance for the processing automation model that is completely learned and an arbitrary test method in operation S250.

If a result of the evaluation in operation S250 is identified as pass, the domain generator 200 may configure the processing automation model learned in operation S240 as a domain conversion model for processing automation of the processing automation model unit 110 in operation S260.

If the result of the evaluation in operation S250 is identified as relearning, the domain generator 200 performs learning by changing the resolution of a latent space in operation S270 and performs learning by changing the resolution of input data in operation S280, and performs model learning by applying a learning result obtained from operation S270 and S280 to operation S220 and S230.

Therefore, synthetic data is produced using domain adaptation, and a data set processing time may be reduced based thereon, and thus, the performance of an artificial intelligence model may be promptly improved.

As described above, although embodiments of the present invention have been described, it is apparent to those skilled in the art that changes and modifications can be made to the present invention without departing from the spirit and scope of the present invention defined by claims.

In addition, reference numerals specified in the claims of the present invention are merely for purpose of clarity and ease of description, but are not limited thereto. The thickness of a line, the magnitude of an element, or the like illustrated in drawings may be illustrated in an exaggerated manner in order to describe embodiments.

In addition, the above-described terms are terms defined in consideration of functions in the present invention, these may be changed depending on the intention of an operator or practice, and thus, the terms should be interpreted based on the content of the whole specification.

In addition, although not explicitly illustrated or described, it is apparent to those skilled in the art that various types of modifications including the technical idea of the present invention can be made based on the matters mentioned in the present invention, and the modifications fall within the scope of the right of the present invention.

In addition, the embodiments described with reference to attached drawings are provided for purpose of describing the present invention, and the scope of the right of the present invention is not limited to the embodiments.

### Description of Reference Numerals

100: original data 110: processing automation model unit
120: processor's terminal 130: processed data
140: data set 200, 200', 200": domain generator
200'a: simulation domain generator 210: domain adaptation unit
210': first domain adaptation unit 210a: first domain unit
210b: second domain unit 220, 220": discriminator
300, 300": domain A data 300': processed data
310: domain B data
400, 400', 400", 400a, 400b: synthetic data
410": segmentation information of synthetic data
500: simulator 510': simulation processed data
520: simulation synthetic data 600: segmentation information

## Claims

1. An apparatus for generating synthetic data for learning an artificial intelligence (AI)-based processing automation model, the apparatus comprising:
a domain generator (200) equipped with a synthetic data generation network that generates synthetic data (400) by performing domain adaptation of domain A data (300) via a generative adversarial network (GAN) when generating the synthetic data, and determines whether the synthetic data (400) has a difference from actual domain B data (310),
wherein the domain generator (200) is configured to generate a synthetic data set based on the generated synthetic data (400).

2. The apparatus of claim 1, wherein the domain generator (200) is configured to additionally construct an augmented data set using the generated synthetic data set and one or more data sets including arbitrary domain data.

3. The apparatus of claim 1, wherein the domain generator (200) configures an integrated data set using the generated synthetic data set and a data set including simulation synthetic data (520) that is generated by a simulation domain generator (200'a) by performing domain adaptation of simulation processed data (510') provided from a simulator (500) via a generative adversarial network and by determining whether a difference from actual domain data is present.

4. The apparatus of claim 1, wherein the domain A data (300) comprises a label via segmentation.

5. The apparatus of claim 1, wherein the domain generator (200) comprises a domain adaptation unit (210) configured to generate the synthetic data (400) via domain adaptation of the domain A data (300), and to configure a synthetic data generation network; and
a discriminator (220) configured to determine whether the synthetic data (400) generated via the domain adaptation has a difference from the actual domain B data (310), and to configure a synthetic data generation network.

6. The apparatus of claim 1, wherein the domain generator (200) comprises a domain adaptation unit (210) configured to generate synthetic data (400a) via domain adaptation of the domain A data (300), and to configure a synthetic data generation network; and
one or more first domain adaptation units (210') installed to be parallel with the domain adaptation unit (210), and configured to generate synthetic data (400b) via domain adaptation of the domain A data (300), and to configure a synthetic data generation network.

7. A method of generating synthetic data, the method comprising:
a) a domain adaptation data generation operation in which a domain generator (200) performs domain adaptation of domain A data (300) via a generative adversarial network (GAN)-based synthetic data generation network, so as to generate synthetic data (400), determines whether the synthetic data (400) has a difference from actual domain B data (310), and generates a synthetic data set based on the synthetic data (400).

8. The method of claim 7, further comprising:
b) a domain adaptation model application operation in which the domain generator (200) performs learning an artificial intelligence (AI)-based processing automation model based on the generated synthetic data set.

9. The method of claim 7 or 8, wherein operation a) comprises:
a-1) an operation in which the domain generator (200) generates domain A synthetic data that is the same as the domain A data (300) without performing domain adaptation, and performs learning that determines whether the generated domain A synthetic data has a difference from the actual domain A data (300); and
a-2) an operation in which the domain generator (200) generates the synthetic data (400) by performing domain adaptation of one of the domain A data (300) or the domain A synthetic data generated via learning in operation a-1), and performs learning that determines whether the synthetic data (400) generated via the domain adaptation has a difference from the actual domain B data (310) .

10. The method of claim 8, wherein operation b) comprises:
b-1) an operation in which the domain generator (200) selects an arbitrary domain conversion data set for learning a processing automation model;
b-2) an operation in which the domain generator (200) sets a resolution of input data to be input to the processing automation model and a resolution of a latent space;
b-3) an operation in which the domain generator (200) performs learning of the processing automation model; and
b-4) an operation in which the domain generator (200) evaluates the processing automation model that is completely learned and determines one of passing or relearning, and performs one of setting of a domain conversion model or relearning based on a result.
